# EUROPEAN PATENT SPECIFICATION

(11) **EP 0 665 115 B1**
(45) Date of publication and mention of the grant of the patent: **06.06.2001**
(21) Application number: 95101182.4
(22) Date of filing: 27.01.1995
(51) Int. Cl.: B41J 3/36

(54) **Apparatus capable of reading and printing images**
Gerät geeignet zum Lesen und Drucken von Bildern
Appareil capable de lire et d'imprimer des images

(30) Priority: 28.01.1994 JP 2488494
(43) Date of publication of application: 02.08.1995
(73) Proprietor: Casio Computer Co., Ltd., Shibuya-ku, Tokyo 151-8543 (JP)
(72) Inventor: Nakatsuka, Hiroshi, c/o Patent Dep. Dev. Div., Sakae-cho, Hamura-shi, Tokyo 190-11 (JP); Nagayama, Yousuke, c/o Patent Dep. Dev. Div., Sakae-cho, Hamura-shi, Tokyo 190-11 (JP); Hayashi, Masaki, c/o Patent Dep. Dev. Div., Sakae-cho, Hamura-shi, Tokyo 190-11 (JP); Yamabe, Hideaki, c/o Patent Dep. Dev. Div., Sakae-cho, Hamura-shi, Tokyo 190-11 (JP)
(74) Representative: Grünecker, Kinkeldey, Stockmair & Schwanhäusser Anwaltssozietät

(56) References cited:
- EP-A- 0 278 004
- EP-A- 0 355 863
- JP-A- 62 258 549
- US-A- 4 706 095

## Description

This invention relates to a printing apparatus which reads the images recorded on various types of mediums and prints these read-out images on a printing medium.

In one known printing apparatus, the images recorded on various types of mediums are read through the movement of the movable main unit of the apparatus and these read-out images are printed on a printing medium provided outside the movable main unit as the movable main unit is moved. See for instance EP-A-0278004.

Great skill is required to print the read-out images through the movement of the movable main unit of the apparatus in the desired positions on the printing medium provided outside the movable main unit as the movable main unit is moved again.

In another known printing apparatus, the character data entered through key operation is printed on label tape.

In this connection, the images read through the movement of the movable main unit of the apparatus may be printed using label tape in such the label printing apparatus. However, in this case, the imaged read through the movement of the movable main unit of the apparatus must be transferred via a data transfer cable to the label printing unit provided separately from the movable main unit. Consequently, the image transfer operation is complicated and errors can occur during data transfer.

Accordingly, an object of the present invention is to provide a printing apparatus capable of reading the image recorded on a given medium and printing the read-out image in a predetermined position on a printing medium easily and speedily.

Another object of the present invention is to provide a printing apparatus capable of reading the image recorded on a given medium through a simple operation and creating a seal easily and speedily by printing the read-out image on a printing medium.

To achieve the foregoing objects, a printing apparatus according to a first aspect of the invention comprises: a movable main unit; image reading means provided on the main unit; and a printing medium which is provided in the main unit, wherein the image reading means reads an image according to the movement of the movable main unit, and the image printing means contains printing means that prints the image read by the image reading means onto the printing medium.

With the printing apparatus according to the first aspect of the invention, it is possible to reliably and speedily print the image read by the movement of the movable main unit onto the printing medium in the main unit through a simple operation.

Furthermore, a printing apparatus according to a second aspect of the invention comprises: a movable main unit; image reading means provided on the main unit; a tape-like printing medium which is provided in the main unit and contains a printing material with a printing surface, an exfoliative material to be exfoliated after printing, and an adhesive layer that bonds the printing material with the exfoliative material; and image printing means provided on the main unit, wherein the image reading means contains a reading section that reads an image according to the movement of the movable main unit, and the image printing means contains moving means that moves the tape-like printing medium in the main unit, and printing means that prints the image read by the image reading means onto the tape-like printing medium being moved by the moving means.

With the printing apparatus according to the second aspect of the invention, it is possible to read the image recorded on a given medium through a simple operation, and print the read-out image on a tape-like printing medium, thereby easily and speedily creating seals to be stuck on the surface of articles.

This invention can be more fully understood from the following detailed description when taken in conjunction with the accompanying drawings, in which:
FIG. 1 is a perspective view of a printing apparatus according to a first embodiment of the present invention;
FIG. 2 is a schematic diagram of the printing apparatus and tape cartridge shown in FIG. 1;
FIG. 3 is a view of the major portions of the tape cartridge and cartridge holder;
FIG. 4 is a view of the tape cartridge installed in the cartridge holder;
FIG. 5 shows the relationship between the width of tape in the tape cartridge and the on/off state of switches SW1 to SW3;
FIG. 6 is a circuit diagram of the printing apparatus according to the first embodiment of the present invention;
FIG. 7 shows an example of operating the printing apparatus in an image read operation;
FIG. 8 shows an example of the image data stored in the image data memory;
FIG. 9 is a flowchart for explaining the printing process in the first embodiment;
FIGS. 10A and 10B show examples of prints obtained when the image stored in the image memory is printed in an enlarged or reduced size according to the seal tape width;
FIG. 11 is a perspective view of a printing apparatus according to a second embodiment of the present invention; and
FIG. 12 is a schematic diagram of the printing apparatus according to the second embodiment.

Hereinafter, referring to the accompanying drawings, a printing apparatus according to a first embodiment of the present invention will be explained.

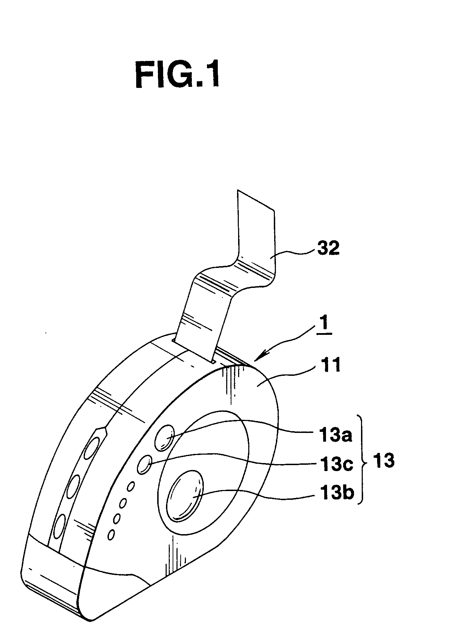

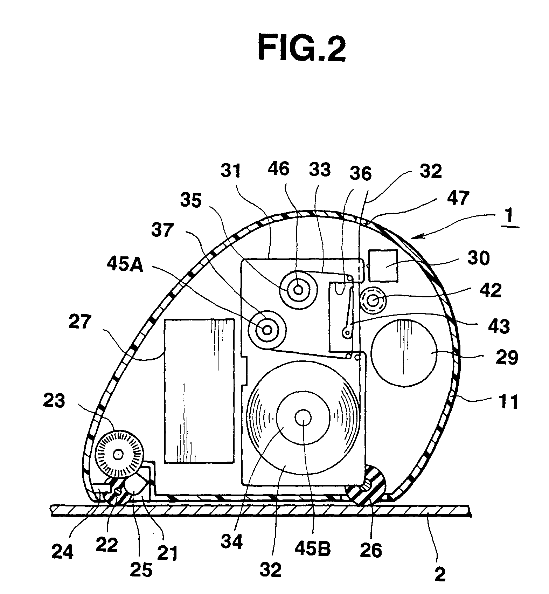

As shown in FIGS. 1 and 2, a printing apparatus 1 has a snail-like main unit 11, on one side of which various switches 13 are provided.

An image read opening 21 is formed at the bottom front end of the main unit 11. Adjacent to the opening 21, there are provided a wheel 22, an encoder 23, a one-dimensional image sensor 24, and an LED array 25.

The wheels 22 are provided on both sides of the main unit 11 so as to protrude slightly from the bottom. The wheels 22 are designed to support the main unit 11 when images are read as the main unit 11 is moved and furthermore to rotate by frictional resistance according to the movement of the main unit 11 .

Many slits are made at equal intervals in the periphery of the encoder 23, which is composed of a rotating plate that rotates as the wheel 22 rotates and a photoemissive element and a photoelectric element, with the rotating plate intervening between these two elements. The photoelectric element is designed to receive light from the photoemissive element each time a slit in the rotating plate passes as the wheel 22 rotates and then to output a pulse signal.

The LED array 25 is designed to illuminate the image surface of a manuscript 2 to be read, from inside the opening 21.

The one-dimensional image sensor 24 is made up of a line CCD with a reading width of 24 mm and a resolution of 8 dots/mm, for example. The image on the manuscript 2 illuminated by the LED array 25 is read by the one-dimensional image sensor 24 via an image-forming lens 3.

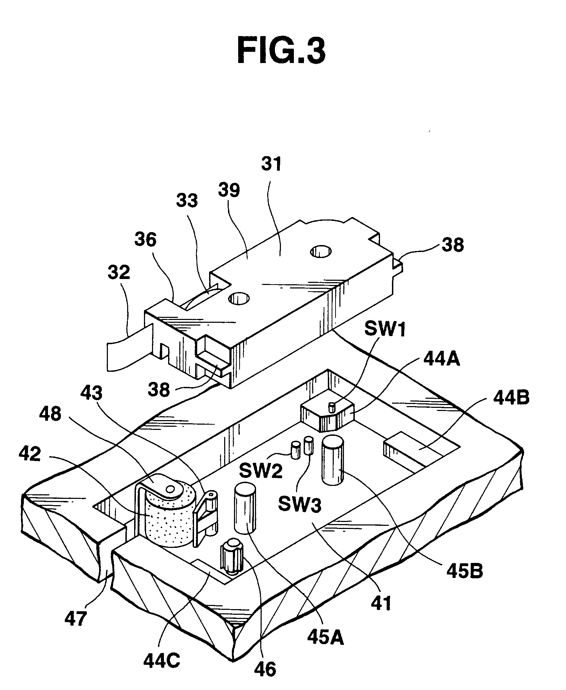

A wheel 26 is provided at the bottom rear end of the main unit 11. The wheel 26 is sufficiently away from the wheels 22. The main unit 11 contains a battery 27 that supplies power to each circuit therein, a cartridge holder 41 (see FIG. 3) that permits installation and removal of a tape cartridge 31 with a different width, a driver 29 that contains a motor for driving a seal tape 32 and an ink ribbon 33 installed in the tape cartridge 31, and a cutter 30 that cuts off the seal tape 32.

Here, the main unit 11 is snail-like on the whole. Since the heavy electronic parts including the battery 27 are arranged in the lower part inside the main unit 11, the main unit has a low center of gravity and therefore is allowed to maintain stable movement when being manually moved.

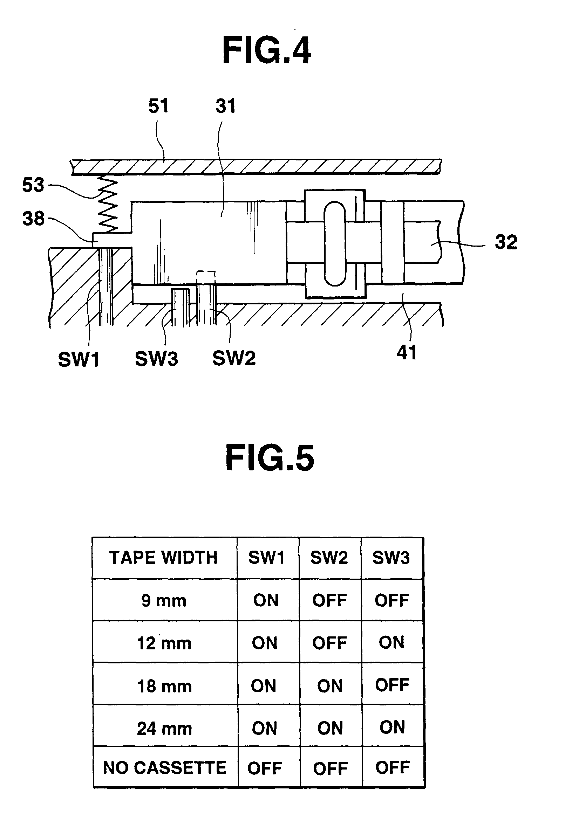

As shown in FIG. 3, the cartridge holder 41 in the main unit 11 has a substantially rectangular parallelepipedic space. A cover 51 formed of one side plate of the main unit 11 is provided on the cartridge holder 41 so as to be able to open and close (see FIG. 4). Inside the cartridge holder 41, a platen roller 42 and a thermal head 43 are placed so as to face each other. Spool spindles 45A and 45B and a ribbon take-up spindle 46 are provided so as to stand straight. In three corners of the cartridge holder 41, mount pads 44A to 44C are provided. A seal tape outlet window 47 is formed in the wall portion of the cartridge holder 41 toward which the seal tape 32 is conveyed. Of the mount pads 44A to 44C, the mount pad 44A has a switch SW1 on it which detects whether or not the tape cartridge 31 is installed. On the bottom inside surface of the cartridge holder 41, there are provided switches SW2 and SW3 for detecting the thickness of the tape cartridge 31 installed, that is, the width of the tape put in the tape cartridge 31.

The platen roller 42 has a top end supported by a bracket 48 and a bottom end pivotally provided on a spindle vertical to the bottom inside surface of the cartridge holder 41. The lower end of the platen roller 42 is coupled with the driver 29 via a mechanism (not shown). The platen roller 42 is rotated by the driver 29 in a printing operation.

The thermal head 43 is provided vertically on the bottom inside surface of the cartridge holder 41 so as to be parallel with the axis of rotation of the platen roller 42. The thermal head 43 is designed to come into contact with the peripheral surface of the platen roller 42 via a coupling mechanism (not shown), when the cover 51 is put over the cartridge holder 41. The thermal head 43 is provided with a large number of heating elements arranged at a rate of nearly 8 dots/mm, for example. These heating elements are designed to heat according to printing data.

The spool spindles 45A and 45B can be engaged with an ink ribbon supply spool 37 and a seal tape supply spool 34 provided in the tape cartridge 31. The ribbon take-up spindle 46 can be engaged with an ink ribbon take-up spool 35. The ribbon take-up spindle 46 is mechanically coupled with the driver 29 via a mechanism (not shown).

The mount pads 44A to 44C are each designed to engage with positioning portions 38 each formed on both sides of the tape cartridge 31 when the tape cartridge 31 is installed in the cartridge holder 41 and thereby to place the cartridge in position.

The switch SW1 is formed of a microswitch, for example, and turns on when the tape cartridge 31 is installed. Similarly, the switches SW2 and SW3 are formed of microswitches, for example, and turn on and off according to the thickness of the tape cartridge 31 installed, as explained later.

The tape cartridge 31 is provided with a case 39 in which a cutaway 36 is formed in the position corresponding to the platen roller 42 and thermal head 43, a seal tape supply spool 34 placed inside the case 39, an ink ribbon supply spool 37, and an ink ribbon take-up spool 35.

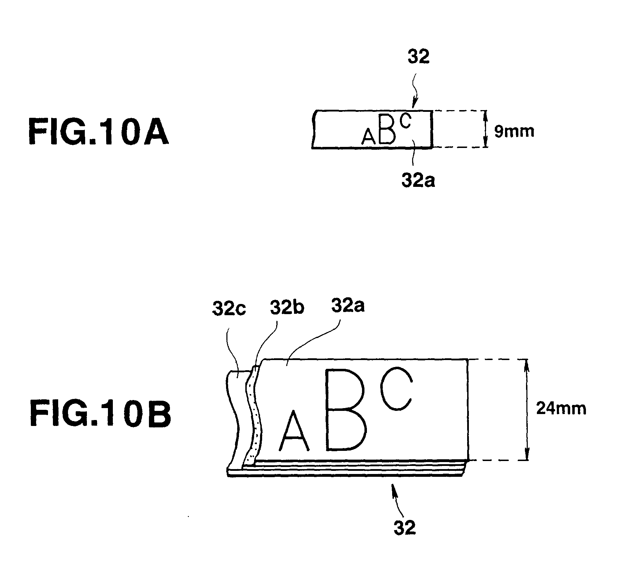

Seal tape 32 is formed by laminating a tape substrate 32a as a resinous printing material and an exfoliative material 32c with an adhesive layer 32b between them, as shown in FIG. 10B. Specifically, the seal tape 32 is made up of a tape substrate 32a on which printing is effected, an exfoliative material 32c that is to be exfoliated after printing, and an adhesive layer 32b that bonds these material together. Thus, after printing has been done on the surface of the tape substrate 32a, the exfoliative material 32c can be exfoliated from the tape substrate 32a via the adhesive layer 32b. The ink ribbon 33 is formed by forming a hot-melt or thermal sublimate ink layer on an ink ribbon substrate.

On both sides of the case 39, the positioning portions 38 are formed so as to protrude in order to position the case 39 itself inside the cartridge holder 41 by coming into contact with the mount pads 44A to 44C.

Four types of tape cartridges 31 having such a structure are previously prepared. Specifically, they include a tape cartridge 31 for housing 9-mm-wide seal tape 32, a tape cartridge 31 for housing 12-mm-wide seal tape 32, a tape cartridge 31 for housing 18-mm-wide seal tape 32, and a tape cartridge 31 for housing 24-mm-wide seal tape 32.

The seal tape 32 and ink ribbon 33 housed in the tape cartridge 31 are formed so as to have the same width. The tape cartridge 31 is given the thickness, or the height, according to the width of the seal tape 32 and ink ribbon 33 housed therein. Specifically, according to the width of the seal tape 32 housed, the thickness of the tape cartridge 31 itself varies. For example, when the seal tape 32 and ink ribbon 33 have a width of 9 mm, the thickness of the tape cartridge 31 is 13 mm; and when the seal tape 32 and ink ribbon 33 have a width of 24 mm, the thickness of the tape cartridge 31 is 28 mm.

As shown FIG. 4, with the tape cartridge 31 put in the cartridge holder 41 and the cover placed, the positioning portion 38 formed on each side of the tape cartridge 31 is urged by a spring 53, which allows the positioning portion 38 to turn on the switch SW1 and at the same time, to turn on and off the microswitches SW2 and SW3 according to the thickness of the tape cartridge 31.

The detecting of whether or not the tape cartridge 31 is installed and the detecting of the thickness of the tape cartridge 31 installed, or the detecting of the width of the seal tape 32 housed in the tape cartridge 31, are effected by detecting the on/off state of these switches SW1 to SW3. FIG. 5 shows the relationship between the on/off operating state of the respective switches SW1 to SW3, the presence/absence of the tape cartridge 31, the thickness of the tape cartridge 31, or the width of seal tape 32.

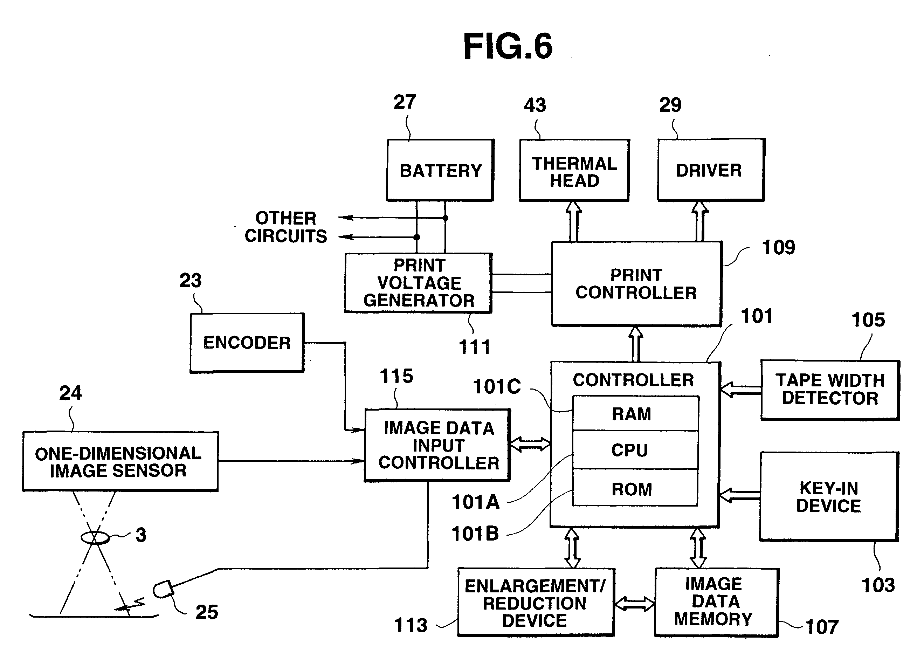

As shown in FIG. 6, the printing apparatus 1 contains a controller 101, a key-in device 103, a tape width detector 105, an image data memory 107, a print controller 109, the thermal head 43, the driver 29, the battery 27, a print voltage generator 111, an enlargement/reduction device 113, an image data input controller 115, the encoder 23, the image sensor 24, and the LED array 25.

The controller 101 includes a CPU 101A, a ROM 101B that stores a program determining the operation of the CPU 101A, and a peripheral circuitry. The controller 101 controls the overall operation of the printing apparatus 1.

The key-in device 103 has a plurality of keys 13 provided on the main unit 11. They include an ON/OFF key 13a, an image read key 13b, a print key 13c, etc.

The tape width detector 105 receives the on/off signal from the respective switches SW1 to SW3, detects the presence/absence of tape cartridge 31 and the width of the seal tape 32 housed in the installed tape cartridge 31, and informs the controller 101 of data on the presence/absence and the width.

The image data memory 107 contains an area that stores the image data read by the image sensor 24 and an editorial area used in editing the image data.

The print controller 109 is designed to thermally control the individual heating elements of the thermal head 43 according to the printing data supplied from the controller 101, and also to control the driver 29 to control the rotation of the platen roller 42 and the ribbon take-up spindle 46.

The battery 27 supplies an operating voltage to each circuit of the main unit 11. The print voltage generator 111 generates a step-up voltage for driving the thermal head 43 from the output voltage of the battery 27.

The image data input controller 115 turns on the LED array 25 in an image read operation under the control of the controller 101, reads one line of output of the image sensor 24 each time the printing apparatus 1 moves a specific distance according to the pulse signal from the encoder 23, converts it into digital data, furthermore converts the digital data into parallel data, and supplies the parallel data to the controller 101. The controller 101 stores the supplied data in the image data memory 107.

Hereinafter, the operation of the printing apparatus thus constructed will be explained.

When a seal is created with the printing apparatus 1 by reading a given image, the user sets a tape cartridge 31 in which seal tape 32 with a given width is housed in the cartridge holder 41, turns on the ON/OFF key 13a, and then presses the image read key 13b.

In response to the turning on of the image read key 13b, the controller 101 turns on the LED array 25 via the image data input controller 115.

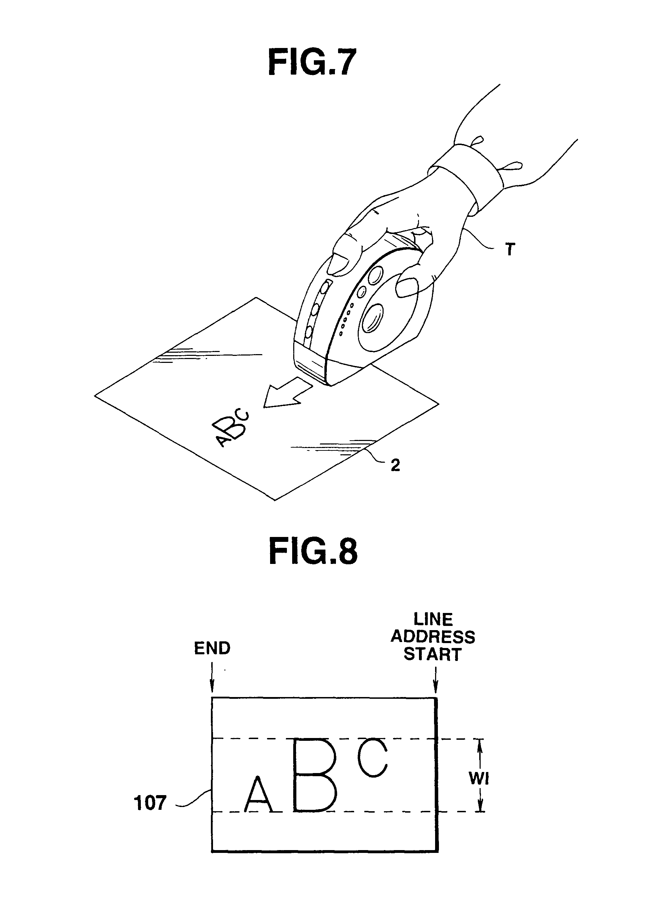

As shown in FIG. 7, the user aligns the printing apparatus 1 with the end of the image formed on the manuscript 2 and reads the image from back to front.

In this state, the LED array 25 illuminates the image on the manuscript 2 to be read via the opening 21. The reflected light passes through the image-forming lens 3 and enters the image sensor 24.

As the printing apparatus 1 moves, the wheel 22 rotates, which then rotates the rotating plate of the encoder 23. Each time the printing apparatus 1 moves a specific distance, the photoelectric element of the encoder 23 outputs a pulse signal to the image data input controller 115.

The image data input controller 115 receives one line of image signal from the image sensor 24 according to the pulse signal from the encoder 23, performs amplification, A/D conversion, and serial/parallel conversion, and supplies the resulting signal to the controller 101. The controller 101 stores the supplied image data in the one-line area of the image data memory 107, updating the addresses one after another.

After one line of image data supplied from the image sensor 24 has been stored, the encoder 23 is in the wait state until a subsequent pulse signal is sent to the encoder 23.

From this time on, when the encoder 23 outputs a pulse signal, the line address is changed to the next one, and a similar storage operation is repeated. As a result, the image data read from the manuscript 2 is written sequentially into the image data memory 107. For example, the read-out image data is stored as shown in FIG. 8.

The controller 101 stores the line address at which the image data is written last, as the last address.

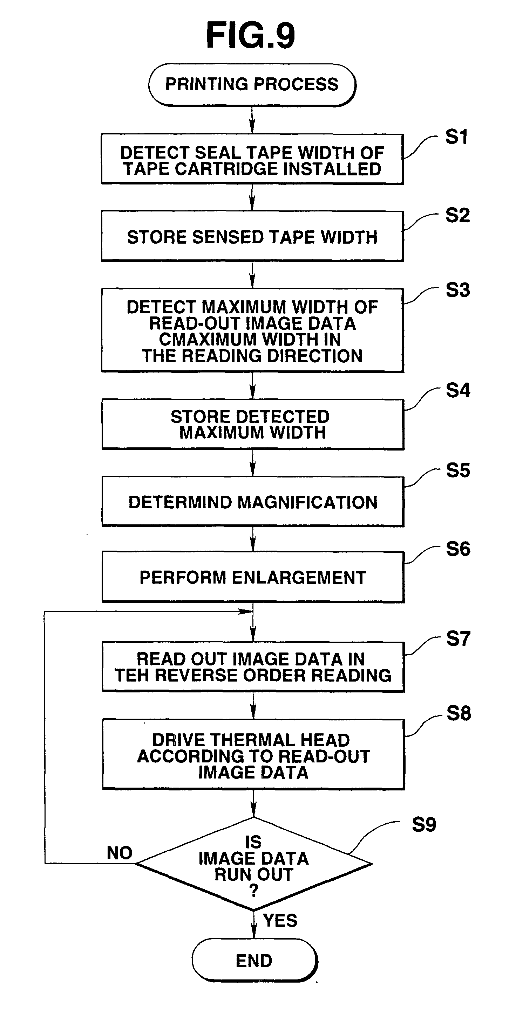

After the reading of data has been finished, the read key 13b is turned off, and then the print key 13c is turned on. The key operation is notified to the controller 101. In response of the notice, the controller 101 starts the processing shown in the flowchart in FIG. 9.

First, the controller 101 causes the tape width detector 105 to sense the width TW of the seal tape 32 in the tape cartridge 31 installed (step S1). The sensed tape width TW is stored in the RAM 101C in the controller 101 (step S2).

Then, the controller 101 scans the stored contents of the image data memory 107, determines the maximum width IW of the read-out image (the maximum width in the reading direction of the image sensor 24) as shown in FIG. 9 (step S3), and stores the determined maximum width IW in the RAM 101C in the controller 101 (step S4).

Next, the controller 101 compares the width TW of seal tape 32 with the maximum width IW of the image, and obtains the magnification of the image according to the following expressions, for example (step S5):

| | |
|---|---|
| TW > 2IW | twice |
| 2IW ≧ TW > 1.5 IW | one and half times |
| 1.5 IW ≧ TW > IW | once |
| IW ≧ TW > 0.75 IW | 0.75 time |
| 0.75 IW ≧ TW | 0.5 time |

Then, the controller 101 activates the enlargement/reduction device 113 and notifies to the enlargement/reduction device 113 the starting-point in-line address and the end-point in-line address stored in the area in which the image data is stored in the image data memory 107.

The enlargement/reduction device 113 sets the notified starting- and end-point in-line addresses in pointers. Then, the device 113 reads the image data sequentially by referring to the values in the pointers, while updating the line addresses one after another, enlarges the read-out image at the magnification determined at step S5, and writes the enlarged image in the editorial area of the image data memory 107 (step S6).

To double the image vertically and horizontally, each dot in the image data has only to be expanded to two dots in height and width (a total of four dots). To enlarge the image at the magnification of × 1.5, each dot in odd-numbered (or even-numbered) rows and columns has only to be enlarged to two dots in the row and column directions. To enlarge or reduced the image at the magnification of × 0.75, one row of and one column of the image data have only to be enlarged or thinned out every four rows and four columns. To enlarge or reduced the image at the magnification of × 0.5, one row of and one column of the image data have only to be enlarged or thinned out every two rows and two columns.

When having finished the enlargement/reduction process, the enlargement/reduction device 133 notifies the controller 101 of the end of the process.

In response to the notice, the controller 101 reads the enlarged or reduced image data in the reverse order of reading, and supplies the read-out data to the print controller 109. That is, the controller reads the first line of image data from the last line of image data in sequence, and supplied the read-out data to the print controller 109 (step S7).

The printing controller 109 controls the heating of each heating element in the thermal head 43 according to the supplied image data, using the print voltage supplied from the print voltage generator 111, and also controls the driver 29 to drive the platen roller 42 and ribbon take-up spindle 46.

This enables the seal tape 32 and ink ribbon 33 to be synchronously conveyed between the platen roller 42 and thermal head 43, being sandwiched therebetween. As a result, the ink layer portion formed on the ink ribbon 33 is thermally melted by the heating control of the heating elements of the thermal head 43, which causes the desired image to be transferred onto the tape substrate 32a of the seal tape 32 (step S8).

The controller 101 repeats the above control operation until it is judged at step S9 that the image data to be read has run out.

The printed ink ribbon 33 is wound around the ink ribbon take-up spool 35, whereas the seal tape 32 is carried out through the seal tape outlet window 47.

After the processing of all the image data has finished, it is judged whether it is true or not. If it is true, the controller 101 terminates the print operation.

The user cuts the seal tape 32 with the cutter 30, which completes creating a seal.

According to the first embodiment, it is possible to read any image on a given medium easily, print it on a durable, resinous seal tape 32, and thereby create a seal.

In the first embodiment, as shown in FIG. 7, the image on the manuscript 2 is read from back to front, and the read-out image is stored in the image data memory 107 line by line in the order that the image has been read. In a printing operation, the order in which the lines are read is the reversal of storage. This prevents the right hand T of the user from being in front of the printing apparatus 1, thereby enabling the user to see the image without being obstructed by the hand T.

Furthermore, according to the first embodiment, since the main unit 11 has a streamline form whose one end is narrower and the other end is wider, this enables the user to see the front edge portion of the main unit 11 easily and thereby check the starting and end positions of reading easily, resulting in a simple and reliable image reading operation.

Additionally, in the first embodiment, the image is enlarged or reduced according to the maximum width IW of the read-out image and the width TW of the seal tape 32 installed, and the enlarged or reduced image is printed. Therefore, for example, when the image as shown in FIG. 8 is read, the image read out in the optimum size is printed on the seal tape 32 with a different width as shown FIGS. 10A and 10B. Therefore, the seal tape 32 can be used effectively within its width, thereby eliminating troublesome work such as setting printing magnification.

Enlargement and reduction may be effected after securing small margins on both sides of the maximum width IW of the read-out image. With this configuration, blanks are left at the top and bottom of the created seal.

The present invention is not limited to the first embodiment. For instance, while in the first embodiment, of the read-out data, only the area whose image has been stored is enlarged or reduced, the entire image may be enlarged or reduced. In addition, the mode of enlargement and reduction and its configuration are arbitrary. As long as the read-out image can be enlarged or reduced suitably according to the width of the seal tape 32 and then printed, enlargement and reduction may be effected with such a configuration and technique.

Similarly, the image may be enlarged at the magnification of × 0.5, × 0.75, × 1.5, and × 2 by a key operation. The image may be enlarged only along the width of the seal tape 32.

According to the instruction from the key-in device 103, a complement of the density data on each dot stored in the image data memory 107 may be obtained, thereby reversing the light and shade of the read-out image.

While in the first embodiment, the image data stored in the image data memory 107 is read out, starting with the end line, it may be read out in reverse, beginning with the start line. This produces a mirror image of the read-out image. Whether reading is started at the start line or the end line may be selected by a key operation.

Although in the first embodiment, four types of seal tape 32 with widths of 9, 12, 18, and 24 mm are used, seal tape with other widths may be used. The arrangement for detecting the width of seal tape 32 is not restricted to the embodiment. Any suitable arrangement may be used.

While in the first embodiment, the print controller 109, the enlargement/reduction device 113, and the image data input controller 115 are provided separately from the controller 101, these controller and device may be incorporated into the controller 101.

Furthermore, in the first embodiment, the editorial area is provided in the image data memory 107, an enlarged or reduced image is created, and then controller 101 reads out the image. Instead, the controller 101 may enlarge or reduce the image while reading the image data, and supply the enlarged or reduced image to the print controller 109.

According to the embodiment, it is possible to read the image on a given medium and print the image on a printing medium easily and speedily.

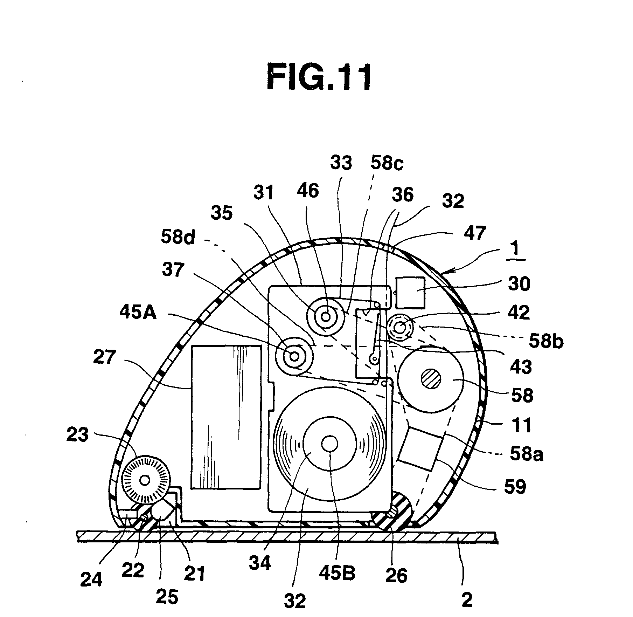

Hereinafter, referring to FIGS. 11 to 13, a second embodiment of the present invention will be explained.

In the second embodiment, the same components as those in the first embodiment are given the same reference symbols and their explanation will be omitted.

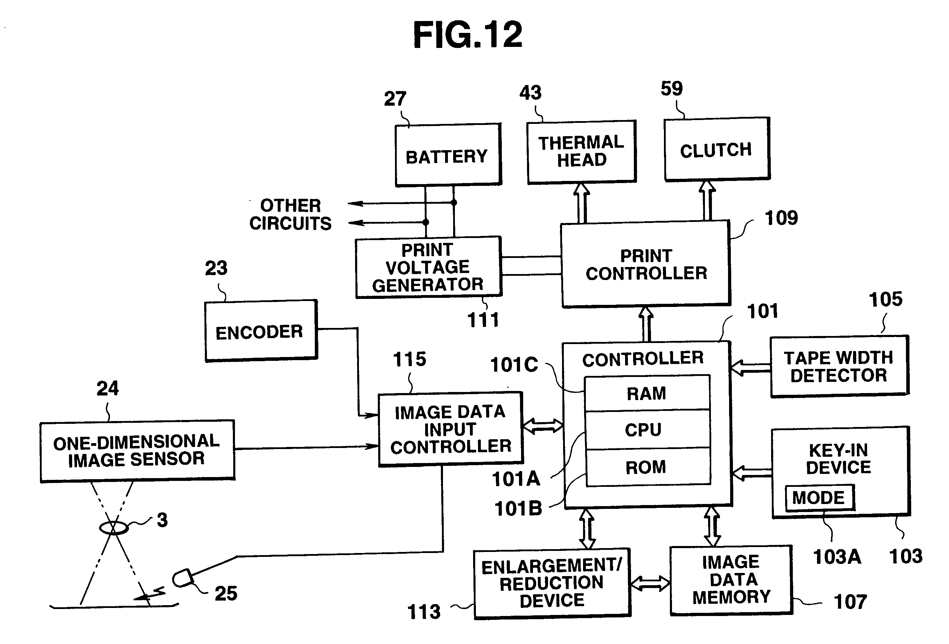

As shown in FIGS. 11 and 12, a mode change switch 13a is provided on one side of the snail-like apparatus body 11 constituting the printing apparatus 1. The mode change switch 13a is a switch for changing between the read mode for reading images and the print mode for printing images. The apparatus body 11 is provided with wheels 22, 26, an encoder 23, a one-dimensional image sensor 24, an LED array 25, and a gear mechanism 58.

The gear mechanism 58 is composed of a plurality of gears 58a to 58d, and is provided between the wheel 26, a spool spindle 45A, a ribbon take-up spindle 46, and a platen roller 42. With the mode change switch 13a in the print mode, when the apparatus body 11 is moved and the wheel 26 rotates accordingly, the gear mechanism 58 rotates according to the rotation of the wheel 26. The spool spindle 45A, the ribbon take-up spindle 46, and the platen roller 42 are rotated as the plurality of gears 58a to 58d constituting the gear mechanism 58 are rotated. On the other hand, with the mode change switch 13a in the read mode, even when the apparatus body 11 is moved and the wheel 26 rotates accordingly, the gear mechanism 58 is designed not to transfer the turning moment to the side of the spool spindle 45A, ribbon take-up spindle 46, and platen roller 42. To achieve this, between the wheel 26 and the gear mechanism 58, there is provide a change clutch mechanism 59 which connects the wheel 26 to the gear mechanism 58 or disconnects the former from the latter, depending on the changing operation, when the mode change switch 13a switches between the read mode and the print mode. The second embodiment differs from the first embodiment in that the former is not provided with the driver 29 (see FIG. 2).

In the second embodiment, as shown in FIG. 6, there are provided the mode change switch 13a and the clutch mechanism 59 as well as the controller 101, key-in device 103, tape width detector 105, image data memory 107, print controller 109, thermal head 43, driver 29, battery 27, print voltage generator 111, enlargement/reduction device 113, image data input controller 115, encoder 23, image sensor 24, and LED array 25.

With this configuration, when a given image is read using the print apparatus 1, the mode change switch 13a is changed to the read mode. Then, according to the mode change, the change clutch mechanism 59 is driven, disconnecting the wheel 26 from the gear 58a constituting the gear mechanism 58. In this state, the image read key 13b is turned on, and as shown in FIG. 7, the print apparatus 1 is aligned with the end portion of an image to be read. When the apparatus is pushed forward, the image sensor 24 reads the image from back to front as explained in the first embodiment. This enables the read-out image data to be stored in the image data memory 107 in sequence. At this time, since the wheel 26 is disconnected from the gear mechanism 58, neither the spool spindle 45A nor the ribbon take-up spindle 46 nor the platen roller 42 are rotated. Furthermore, since in the read mode, the thermal head 43 is prevented from heating, printing will not be done on the seal tape unexpectedly.

On the other hand, when an image is printed using the printing apparatus 1, the mode change switch 13a is changed to the print mode. Then, according to the change mode, the change clutch mechanism 59 is driven and the wheel 26 is connected to the gear 58a constituting the gear mechanism 58. In this state, when the print apparatus 1 is moved while the print key 13c is turned on as shown in FIG. 7, the wheel 26 is rotated according to the movement. This causes the plurality of gears constituting the gear mechanism 58 to rotate one after another via the change clutch mechanism 59 as the wheel 26 rotates. As a result, the rotation of the gear mechanism 58 rotates the spool spindle 45A, ribbon take-up spindle 46, and platen roller 42. Therefore, as explained in the first embodiment, the seal tape 32 and ink ribbon 33 are sandwiched between the platen roller 42 and the thermal head 43 and synchronously conveyed therebetween. In this case, since in the print mode, the thermal head 43 is allowed to heat, the thermal head 43 melts the ink layer portion formed on the ink ribbon 33, thereby transferring the stored image onto the tape substrate 32a of the seal tape 32. In the second embodiment, the respective processes including the tape width detecting process, the image maximum width detecting process, the magnification determining process, the enlargement process, the image data reading process, and the thermal head heating process, are the same as those in the first embodiment (steps S1 to S9 in FIG. 9).

According to the second embodiment, with the mode change switch 13a in the print mode, when the printing apparatus 1 is moved, the rotating moment of the wheel 26 is transferred to the gear mechanism 58 via the change clutch mechanism 59. The rotating moment transferred to the gear mechanism 58 rotates the spool spindle 45A, ribbon take-up spindle 46, and platen roller 42 without using a special motor. Therefore, it is possible to provide a low-cost printing apparatus.

As described above, with the present invention, the image is enlarged or reduced according to the size of the read-out image and the size of a printing medium to be used. This eliminates troublesome magnification setting and enables the image to be printed on a printing medium legibly.

According to the present invention, it is possible to create a seal easily and reliably by printing the manually read image on a printing medium on one side of which an adhesive layer is applied, through a simple operation.

Furthermore, a seal with a well-balanced image can be created easily and reliably by detecting the maximum width of the read-out image and the size or width of the printing medium, enlarging or reducing the read-out image, and then printing it in a suitable size on the printing medium.

## Claims

1. A printing apparatus characterized by comprising:
a movable main unit (11);
image reading means (24) provided on said main unit (11);
a tape-like printing medium (32) which is provided in said main unit (11) and includes a printing material (32a) with a printing surface, an exfoliative material (32c) to be exfoliated after printing, and an adhesive layer (32b) which bonds the printing material (32a) with the exfoliative material (32c); and
image printing means (43) provided on said main unit (11), wherein:
said image reading means (24) includes an image reader which reads an image according to the movement of said main unit (11); and
said image printing means (43) includes moving means (29, 42) which moves said tape-like printing medium (32) in said main unit (11), and a printer (43) which prints the image read by said image reading means (24) onto said tape-like printing medium (32) being moved by said moving means (29, 42).

2. A printing apparatus according to claim 1, characterized by further comprising:
first detecting means (101) for detecting the maximum width in the direction perpendicular to the direction in which said main unit (11) moves, of the image read by said image reading means (24); and
second detecting means (105) for detecting the width of said printing medium (32), wherein
said image printing means (43) includes means (43, 113) which modifies the image read by said image reading means (24) and prints the modified image on said printing medium (32) on the basis of the maximum width detected by said first detecting means (101) and the width of the printing medium (32) detected by said second detecting means (105).

3. A printing apparatus according to claim 1, characterized in that said main unit (11) is made narrower at one end and wider at the other end, and said image reading means (24) is provided at said one end.

4. A printing apparatus according to claim 1, characterized in that said image reading means (24) includes image storage means (107) which stores read-out images.

5. A printing apparatus according to claim 1, characterized in that said image reading means (24) includes image storage means (107) which stores read-out images, and
said printer (43) of said image printing means (43) prints the image stored in said image storage means (107) onto said printing medium (32).

6. A printing apparatus according to claim 1, characterized in that said image reading means (24) includes image storage means (107) which stores the read-out images in the order in which they have been read, and
said image printing means (43) includes means (101) which reads the images stored in said image storage means (107) from said image storage means (107) in the order different from the order in which they have been stored and supplies the images to said printer (43).

7. A printing apparatus characterized by comprising:
a movable main unit (11);
image reading means (24) provided on said main unit (11); and
a printing medium (32) which is provided in said main unit (11), wherein:
said image reading means (24) reads an image according to the movement of said main unit (11); and
image printing means (43) provided in said main unit including a printer (43) which prints the image read by said image reading means (24) onto said printing medium (32).

8. A printing apparatus according to claim 7, characterized by further comprising:
first detecting means (101) for detecting the maximum width of the image read by said image reading means (24); and
second detecting means (105) for detecting the size of said printing medium (32); and
image changing means (113) for changing the size of the image read by said image reading means (24) on the basis of the maximum width of the image detected by said first detecting means (101) and the size of the printing medium (32) detected by said second detecting means (105), wherein
said image printing means (43) forms the image whose size has been changed by said image changing means (113) onto said printing medium (32).

9. A printing apparatus according to claim 7, characterized by further comprising:
first detecting means (101) for detecting the maximum width in the direction perpendicular to the direction in which said main unit (11) moves, of the image read by said image reading means (24); and
second detecting means (105) for detecting the width of said printing medium (32), wherein
said image printing means includes means (43, 113) which modifies the image read by said image reading means (24) and prints the modified image on said printing medium (32) on the basis of the maximum width detected by said first detecting means (101) and the width of the printing medium (32) detected by said second detecting means (105).

10. A printing apparatus according to claim 7, characterized in that said main unit (11) is made narrower at one end and wider at the other end, and said image reading means (24) is provided at said one end.

11. A printing apparatus according to claim 7, characterized in that said image reading means (24) includes image storage means (107) which stores read-out images.

12. A printing apparatus according to claim 7, characterized in that said image reading means (24) includes image storage means (107) which stores read-out images, and
said image printing means includes means (43) which prints the image stored in said image storage means (107) onto said printing medium (32).

13. A printing apparatus according to claim 7, characterized in that said image reading means (24) includes image storage means (107) which stores the read-out images in the order in which they have been read, and
said image printing means includes means (101) which reads the images stored in said image storage means (107) from said image storage means (107) in the order different from the order in which they have been stored, and supplies them to said printer (43) to print them on the printing medium (32).

14. A printing apparatus according to claim 7, characterized in that said printing medium (32) is composed of a printing material (32a) on which printing is done by said image printing means (43), an exfoliative material (32c), and an adhesive layer (32b) which bonds these materials together.

15. A printing apparatus characterized by comprising:
a cartridge (31) in which a printing medium (32) is housed;
an main unit (11) in which said cartridge (31) is installed in a detachable manner and which is moved by the user;
image reading means (24) which is provided on said main unit and reads images as said main unit (11) is moved; and
printing means (43) which is installed on said main unit (11) and prints the image read by said image reading means (24) onto said printing medium (32) in said cartridge (31).

16. A printing apparatus according to claim 15, characterized by further comprising:
first detecting means (101) for detecting the maximum width in the direction perpendicular to the direction in which said main unit (11) moves, of the image read by said image reading means (24); and
second detecting means (105) for detecting the width of said printing medium (32), wherein:
said image printing means includes printing means (43, 113) which modifies the image read by said image reading means (24) and prints the modified image on said printing medium (32) on the basis of the maximum width detected by said first detecting means (101) and the width of said printing medium (32) detected by said second detecting means (105).

17. A printing apparatus according to claim 15, characterized by further comprising:
first detecting means (101) for detecting the maximum width of the image read by said image reading means (24); and
second detecting means (105) for detecting the width of said printing medium (32), wherein
said image printing means includes means (43, 113) which modifies the image read by said image reading means (24) and prints the modified image on said printing medium (32) on the basis of the maximum width detected by said first detecting means (101) and the width of the printing medium (32) detected by said second detecting means (105).

18. A printing apparatus according to claim 15, characterized in that said main unit (11) is made narrower at one end and wider at the other end, and said image reading means (24) is provided at said one end.

19. A printing apparatus according to claim 15, characterized in that said image reading means (24) includes image storage means (107) which stores read-out images.

20. A printing apparatus according to claim 15, characterized in that said image reading means (24) includes image storage means (107) which stores read-out images, and
said image printing means includes a printer (43) which prints the image stored in said image storage means (107).

21. A printing apparatus according to claim 15, characterized in that said image reading means (24) includes image storage means (107) which stores the read-out images in the order in which they have been read, and
said image printing means includes means (43, 101) which reads the images stored in said image storage means (107) from said image storage means (107) in the order different from the order in which they have been stored, and then prints them onto said printing medium (32).

22. A printing apparatus according to claim 15, characterized in that said printing medium (32) is composed of a printing material (32a) on which printing is done by said image printing means (43), an exfoliative material (32c), and an adhesive layer (32b) which bonds these materials together.

23. A printing apparatus characterized by comprising:
an main unit (11) moved by the user;
image reading means (24) provided in the lower part of said main unit (11);
image printing means (43) provided in said main unit (11);
a printing medium (32) which is provided in said main unit (11) and on which printing is effected by said image printing means (43);
mode setting means (103A) which is provided on said main unit (11) and sets either an image read mode or an image print mode; and
driving means (58, 59, 101) provided on said main unit (11), wherein:
said driving means (58, 59, 101) includes means which, with said mode setting means (103A) in the print mode, when said main unit (11) is moved, drives said image printing means (43) to print on said printing medium (32) according to the movement, and which, with said mode setting means (103A) in the read mode, when the main unit (11) is moved, drives said image reading means (24) to read according to the movement.

24. A printing apparatus according to claim 23, characterized by further comprising:
first detecting means (101) for detecting the maximum width of the image read by said image reading means (24); and
second detecting means (105) for detecting the size of said printing medium (32);
image changing means (113) for changing the size of the image read by said image reading means (24) on the basis of the maximum width detected by said first detecting means (101) and the size of the printing medium (32) detected by said second detecting means (105), wherein
said image printing means (43) forms the image changed by said image change means (113) on said printing medium (32).

25. A printing apparatus according to claim 23, characterized by further comprising:
first detecting means (101) for detecting the maximum width in the direction perpendicular to the direction in which said main unit (11) moves, of the image read by said image reading means (24); and
second detecting means (105) for detecting the width of said printing medium (32), wherein
said image printing means includes printing means (43, 113) which modifies the image read by said image reading means (24) and prints the modified image on said printing medium (32) on the basis of the maximum width detected by said first detecting means (101) and the width of the printing medium (32) detected by said second detecting means (105).

26. A printing apparatus according to claim 23, characterized in that said main unit (11) is made narrower at one end and wider at the other end, and said image reading means (24) is provided at said one end.

27. A printing apparatus according to claim 23, characterized in that said image reading means (24) includes image storage means (107) which stores read-out images.

28. A printing apparatus according to claim 23, characterized in that said image reading means (24) includes image storage means (107) which stores read-out images, and
said image printing means (43) includes a printer (43) which prints the image stored in said image storage means (107).

29. A printing apparatus according to claim 23, characterized in that said image reading means (24) includes image storage means (107) which stores the read-out images in the order in which they have been read, and
said image printing means (43) includes means (43, 101) which reads the images stored in said image storage means (107) from said image storage means (107) in the order different from the order in which they have been stored, and then prints them onto said printing medium.

30. A printing apparatus according to claim 23, characterized in that said printing medium (32) is composed of a printing material (32a) on which printing is done by said image printing means (43), an exfoliative material (32c), and an adhesive layer (32b) which bonds these materials together.

31. A printing apparatus characterized by comprising:
an main unit (11) moved by the user;
image reading means (24) which is provided in the lower part of said main unit (11) and reads images as said main unit (11) is moved;
storage means (107) which is provided in said main unit (11) and stores the images read by said image reading means (24);
a tape-like printing medium (32) provided in said main unit (11); and
printing means (43) which is provided in said main unit (11) and prints the image stored in said storage means (107) onto said printing medium (32), while said printing medium (32) is being conveyed toward the outside of said main unit (11).

32. A printing apparatus according to claim 31, characterized by further comprising:
first detecting means (101) for detecting the maximum width of the image read by said image reading means (24); and
second detecting means (105) for detecting the size of said printing medium (32);
image changing means (113) for changing the size of the image read by said image reading means (24) on the basis of the maximum width detected by said first detecting means (101) and the size of the printing medium (32) detected by said second detecting means (105), wherein
said image printing means (43) forms the image changed by said image changing means (113) on said printing medium (32).

33. A printing apparatus according to claim 31, characterized in that said printing medium (32) is housed in a cartridge (31) and the cartridge (31) is installed in said main unit (11) in a detachable manner.

## Patentansprüche

1. Druckvorrichtung, **dadurch gekennzeichnet,** dass sie umfasst:
eine bewegliche Haupteinheit (11);
eine Bildleseeinrichtung (24), die an der Haupteinheit (11) vorhanden ist;
ein bandförmiges Druckmedium (32), das in der Haupteinheit (11) vorhanden ist und ein Druckmaterial (32a) mit einer Druckfläche, ein Abziehmaterial (32c), das nach dem Drucken abgezogen wird, und eine Klebeschicht (32b) enthält, die das Druckmaterial (32a) mit dem Abziehmaterial (32c) verbindet; und
eine Bilddruckeinrichtung (43), die an der Haupteinheit (11) vorhanden ist, wobei:
die Bildleseeinrichtung (24) einen Bildleser enthält, der ein Bild entsprechend der Bewegung der Haupteinheit (11) liest; und
die Bilddruckeinrichtung (43) eine Bewegungseinrichtung (29,42), die das bandförmige Druckmedium (32) in der Haupteinheit (11) bewegt, und einen Drucker (43) enthält, der das von der Bildleseeinrichtung (24) gelesene Bild auf das bandförmige Druckmedium (32) aufdruckt, das von der Bewegungseinrichtung (29,42) bewegt wird.

2. Druckvorrichtung nach Anspruch 1, **dadurch gekennzeichnet,** dass sie des Weiteren umfasst:
eine erste Erfassungseinrichtung (101), die die maximale Breite des von der Bildleseeinrichtung (24) gelesenen Bildes in der Richtung senkrecht zu der Richtung erfasst, in der sich die Haupteinheit (11) bewegt; und
eine zweite Erfassungseinrichtung (105), die die Breite des Druckmediums (32) erfasst, wobei:
die Bilddruckeinrichtung (43) eine Einrichtung (43,113) enthält, die das von der Bildleseeinrichtung (24) gelesene Bild auf der Grundlage der maximalen Breite, die von der ersten Erfassungseinrichtung (101) erfasst wird, und der Breite des Druckmediums (32), die von der zweiten Erfassungseinrichtung (105) erfasst wird, abwandelt und das abgewandelte Bild auf das Druckmedium (32) aufdruckt.

3. Druckvorrichtung nach Anspruch 1, **dadurch gekennzeichnet,** dass die Haupteinheit (11) an einem Ende schmaler und am anderen Ende breiter ist, und dass die Bildleseeinrichtung (24) an dem einen Ende vorhanden ist.

4. Druckvorrichtung nach Anspruch 1, **dadurch gekennzeichnet,** dass die Bildleseeinrichtung (24) eine Bildspeichereinrichtung (107) enthält, die ausgelesene Bilder speichert.

5. Druckvorrichtung nach Anspruch 1, **dadurch gekennzeichnet,** dass die Bildleseeinrichtung (24) eine Bildspeichereinrichtung (107) enthält, die ausgelesene Bilder speichert, und
der Drucker (43) der Bilddruckeinrichtung (43) das in der Bildspeichereinrichtung (107) gespeicherte Bild auf das Druckmedium (32) aufdruckt.

6. Druckvorrichtung nach Anspruch 1, **dadurch gekennzeichnet,** dass die Bildleseeinrichtung (24) eine Bildspeichereinrichtung (107) enthält, die die ausgelesenen Bilder in der Reihenfolge speichert, in der sie gelesen wurden, und
die Bilddruckeinrichtung (43) eine Einrichtung (101) enthält, die die in der Bildspeichereinrichtung (107) gespeicherten Bilder aus der Bildspeichereinrichtung (107) in der Reihenfolge ausliest, die sich von der Reihenfolge, in der sie gespeichert wurden, unterscheidet, und die Bilder dem Drucker (43) zuführt.

7. Druckvorrichtung, **dadurch gekennzeichnet**, dass sie umfasst:
eine bewegliche Haupteinheit (11);
eine Bildleseeinrichtung (24), die an der Haupteinheit (11) vorhanden ist; und
ein Druckmedium (32), das in der Haupteinheit (11) vorhanden ist, wobei:
die Bildleseeinheit (24) ein Bild entsprechend der Bewegung der Haupteinheit (11) liest; und
die Bilddruckeinrichtung (43), die in der Haupteinheit vorhanden ist, einen Drucker (43) enthält, der das von der Bildleseeinrichtung (24) gelesene Bild auf das Druckmedium (32) aufdruckt.

8. Druckvorrichtung nach Anspruch 7, **dadurch gekennzeichnet,** dass sie des Weiteren umfasst:
eine erste Erfassungseinrichtung (101), die die maximale Breite des von der Bildleseeinrichtung (24) gelesenen Bildes erfasst; und
eine zweite Erfassungseinrichtung (105), die die Größe des Druckmediums (32) erfasst; und
eine Bildveränderungseinrichtung (113), die die Größe des von der Bildleseeinrichtung (24) gelesenen Bildes auf der Grundlage der maximalen Breite des Bildes, die von der ersten Erfassungseinrichtung (101) erfasst wird, und der Größe des Druckmediums (32), die von der zweiten Erfassungseinrichtung (105) erfasst wird, verändert, wobei:
die Bilddruckeinrichtung (43) das Bild, dessen Größe von der Bildveränderungseinrichtung (113) verändert worden ist, auf dem Druckmedium (32) erzeugt.

9. Druckvorrichtung nach Anspruch 7, **dadurch gekennzeichnet**, das sie des Weiteren umfasst:
eine erste Erfassungseinrichtung (101), die die maximale Breite des von der Bildleseeinrichtung (24) gelesenen Bildes in der Richtung senkrecht zu der Richtung erfasst, in der sich die Haupteinheit (11) bewegt; und
eine zweite Erfassungseinrichtung (105), die die Breite des Druckmediums (32) erfasst, wobei:
die Bilddruckeinrichtung eine Einrichtung (43,113) enthält, die das von der Bildleseeinrichtung (24) gelesene Bild auf der Grundlage der maximalen Breite, die von der ersten Erfassungseinrichtung (101) erfasst wird, und der Breite des Druckmediums (32), die von der zweiten Erfassungseinrichtung (105) erfasst wird, abwandelt und das abgewandelte Bild auf das Druckmedium (32) aufdruckt.

10. Druckvorrichtung nach Anspruch 7, **dadurch gekennzeichnet,** dass die Haupteinheit (11) an einem Ende schmaler und am anderen Ende breiter ist, und dass die Bildleseeinrichtung (24) an dem einen Ende vorhanden ist.

11. Druckvorrichtung nach Anspruch 7, **dadurch gekennzeichnet,** dass die Bildleseeinrichtung (24) eine Bildspeichereinrichtung (107) enthält, die ausgelesene Bilder speichert.

12. Druckvorrichtung nach Anspruch 7, **dadurch gekennzeichnet,** dass die Bildleseeinrichtung (24) eine Bildspeichereinrichtung (107) enthält, die ausgelesene Bilder speichert, und
die Bilddruckeinrichtung eine Einrichtung (43) enthält, die das in der Bildspeichereinrichtung (107) gespeicherte Bild auf das Druckmedium (32) aufdruckt.

13. Druckvorrichtung nach Anspruch 7, **dadurch gekennzeichnet,** dass die Bildleseeinrichtung (24) eine Bildspeichereinrichtung (107) enthält, die die ausgelesenen Bilder in der Reihenfolge speichert, in der sie gelesen wurden, und
die Bilddruckeinrichtung eine Einrichtung (101) enthält, die die in der Bildspeichereinrichtung (107) gespeicherten Bilder aus der Bildspeichereinrichtung (107) in der Reihenfolge ausliest, die sich von der Reihenfolge unterscheidet, in der sie gespeichert wurden, und sie dem Drucker (43) zuführt, um sie auf das Druckmedium (32) aufzudrucken.

14. Druckvorrichtung nach Anspruch 7, **dadurch gekennzeichnet,** dass das Druckmedium (32) aus einem Druckmaterial (32a), auf dem das Drucken mit der Bilddruckeinrichtung (43) ausgeführt wird, einem Abziehmaterial (32c) und einer Klebeschicht (32b) besteht, die diese Materialien miteinander verbindet.

15. Druckvorrichtung, **dadurch gekennzeichnet,** dass sie umfasst:
eine Kassette (31), in der ein Druckmedium (32) aufgenommen ist;
eine Haupteinheit (11), in der die Kassette (31) auf lösbare Weise installiert wird, und die durch den Benutzer bewegt wird;
eine Bildleseeinrichtung (24), die an der Haupteinheit vorhanden ist und Bilder liest, wenn die Haupteinheit (11) bewegt wird; und
eine Druckeinrichtung (43), die an der Haupteinheit (11) installiert ist und das von der Bildleseeinrichtung (24) gelesene Bild auf das Druckmedium (32) in der Kassette (31) aufdruckt.

16. Druckvorrichtung nach Anspruch 15, **dadurch gekennzeichnet,** dass sie des Weiteren umfasst:
eine erste Erfassungseinrichtung (101), die die maximale Breite des von der Bildleseeinrichtung (24) gelesenen Bildes in der Richtung senkrecht zu der Richtung erfasst, in der sich die Haupteinheit (11) bewegt; und
eine zweite Erfassungseinrichtung (105), die die Breite des Druckmediums (32) umfasst, wobei:
die Bilddruckeinrichtung eine Druckeinrichtung (43,113) enthält, die das von der Bildleseeinrichtung (24) gelesene Bild auf der Grundlage der maximalen Breite, die von der ersten Erfassungseinrichtung (101) erfasst wird, und der Breite des Druckmediums (32), die von der zweiten Erfassungseinrichtung (105) erfasst wird, abwandelt und das abgewandelte Bild auf das Druckmedium (32) aufdruckt.

17. Druckvorrichtung nach Anspruch 15, **dadurch gekennzeichnet,** dass sie des Weiteren umfasst:
eine erste Erfassungseinrichtung (101), die die maximale Breite des von der Bildleseeinrichtung (24) gelesenen Bildes erfasst, und
eine zweite Erfassungseinrichtung (105), die die Breite des Druckmediums (32) erfasst, wobei:
die Bilddruckeinrichtung eine Einrichtung (43,113) enthält, die das von der Bildleseeinrichtung (24) gelesene Bild auf der Grundlage der maximalen Breite, die von der ersten Erfassungseinrichtung (101) erfasst wird, und der Breite des Druckmediums (32), die von der zweiten Erfassungseinrichtung (105) erfasst wird, abwandelt und das abgewandelte Bild auf das Druckmedium (32) aufdruckt.

18. Druckvorrichtung nach Anspruch 15, **dadurch gekennzeichnet,** dass die Haupteinheit (11) an einem Ende schmaler und an dem anderen Ende breiter ist, und dass die Bildleseeinrichtung (24) an dem einen Ende vorhanden ist.

19. Druckvorrichtung nach Anspruch 15, **dadurch gekennzeichnet,** dass die Bildleseeinrichtung (24) eine Bildspeichereinrichtung (107) enthält, die ausgelesene Bilder speichert.

20. Druckvorrichtung nach Anspruch 15, **dadurch gekennzeichnet,** dass die Bildleseeinrichtung (24) eine Bildspeichereinrichtung (107) enthält, die ausgelesene Bilder speichert, und
die Bilddruckeinrichtung einen Drucker (43) enthält, der die in der Bildspeichereinrichtung (107) gespeicherten Bilder druckt.

21. Druckvorrichtung nach Anspruch 15, **dadurch gekennzeichnet,** dass die Bildleseeinrichtung (24) eine Bildspeichereinrichtung (107) enthält, die die ausgelesenen Bilder in der Reihenfolge speichert, in der sie gelesen wurden, und
die Bilddruckeinrichtung eine Einrichtung (43,101) enthält, die die in der Bildspeichereinrichtung (107) gespeicherten Bilder aus der Bildspeichereinrichtung (107) in der Reihenfolge ausliest, die sich von der Reihenfolge unterscheidet, in der sie gespeichert wurden, und sie dann auf das Druckmedium (32) aufdruckt.

22. Druckvorrichtung nach Anspruch 15, **dadurch gekennzeichnet,** dass das Druckmedium (32) aus einem Druckmaterial (32a), auf dem Drucken mit der Bilddruckeinrichtung (43) ausgeführt wird, einem Abziehmaterial (32c) und einer Klebeschicht (32b) besteht, die diese Materialien miteinander verbindet.

23. Druckvorrichtung, **dadurch gekennzeichnet,** dass sie umfasst:
eine Haupteinheit (11), die von dem Benutzer bewegt wird;
eine Bildleseeinrichtung (24), die im unteren Teil der Haupteinheit (11) vorhanden ist;
eine Bilddruckeinrichtung (43), die in der Haupteinheit (11) vorhanden ist;
ein Druckmedium (32), das in der Haupteinheit (11) vorhanden ist, und auf dem Drucken mit der Bilddruckeinrichtung (43) ausgeführt wird;
eine Modus-Einstelleinrichtung (103A), die an der Haupteinheit (11) vorhanden ist, und entweder einen Bildlese-Modus oder einen Bilddruck-Modus einstellt; und
eine Antriebseinrichtung (58,59,101), die an der Haupteinheit (11) vorhanden ist, wobei;
die Antriebseinrichtung (58,59,101) eine Einrichtung enthält, die, wenn sich die Modus-Einstelleinrichtung (103A) in dem Druck-Modus befindet und die Haupteinheit (11) bewegt wird, die Bilddruckeinrichtung (43) so antreibt, dass sie entsprechend der Bewegung auf das Druckmedium (32) aufdruckt, und die, wenn sich die Modus-Einstelleinrichtung (103A) in dem Lese-Modus befindet und die Haupteinheit (11) bewegt wird, die Bildleseeinrichtung (24) so antreibt, dass sie entsprechend der Bewegung liest.

24. Druckvorrichtung nach Anspruch 23, **dadurch gekennzeichnet,** dass sie des Weiteren umfasst:
eine erste Erfassungseinrichtung (101), die die maximale Breite des von der Bildleseeinrichtung (24) gelesenen Bildes erfasst; und
eine zweite Erfassungseinrichtung (105), die die Größe des Druckmediums (32) erfasst;
eine Bildveränderungseinrichtung (113), die die Größe des von der Bildleseeinrichtung (24) gelesenen Bildes auf der Grundlage der maximalen Breite, die von der ersten Erfassungseinrichtung (101) erfasst wird, und der Größe des Druckmediums (32), die von der zweiten Erfassungseinrichtung (105) erfasst wird, verändert, wobei:
die Bilddruckeinrichtung (43) das durch die Bildveränderungseinrichtung (113) veränderte Bild auf dem Druckmedium (32) erzeugt.

25. Druckvorrichtung nach Anspruch 23, **dadurch gekennzeichnet,** dass sie des Weiteren umfasst:
eine erste Erfassungseinrichtung (101), die die maximale Breite des von der Bildleseeinrichtung (24) gelesenen Bildes in der Richtung senkrecht zu der Richtung erfasst, in der sich die Haupteinheit (11) bewegt; und
eine zweite Erfassungseinrichtung (105), die die Breite des Druckmediums (32) erfasst, wobei:
die Bilddruckeinrichtung eine Druckeinrichtung (43,13) enthält, die das von der Bildleseeinrichtung (24) gelesene Bild auf der Grundlage der maximalen Breite, die von der ersten Erfassungseinrichtung (101) erfasst wird, und der Breite des Druckmediums (32), die von der zweiten Erfassungseinrichtung (105) erfasst wird, abwandelt und das abgewandelte Bild auf das Druckmedium (32) aufdruckt.

26. Druckvorrichtung nach Anspruch 23, **dadurch gekennzeichnet,** dass die Haupteinheit (11) an einem Ende schmaler und am anderen Ende breiter ist, und dass die Bildleseeinrichtung (24) an dem einen Ende vorhanden ist.

27. Druckvorrichtung nach Anspruch 23, **dadurch gekennzeichnet,** dass die Bildleseeinrichtung (24) eine Bildspeichereinrichtung (107) enthält, die ausgelesene Bilder speichert.

28. Druckvorrichtung nach Anspruch 23, **dadurch gekennzeichnet,** dass die Bildleseeinrichtung (24) eine Bildspeichereinrichtung (107) enthält, die ausgelesene Bilder speichert, und
die Bilddruckeinrichtung (43) einen Drucker (43) enthält, der das in der Bildspeichereinrichtung (107) gespeicherte Bild druckt.

29. Druckvorrichtung nach Anspruch 23, **dadurch gekennzeichnet,** dass die Bildleseeinrichtung (24) eine Bildspeichereinrichtung (107) enthält, die die ausgelesenen Bilder in der Reihenfolge speichert, in der sie gelesen wurden, und
die Bilddruckeinrichtung (43) eine Einrichtung (43,101) enthält, die die in der Bildspeichereinrichtung (107) gespeicherten Bilder aus der Bildspeichereinrichtung (107) in der Reihenfolge ausliest, die sich von der Reihenfolge unterscheidet, in der sie gespeichert wurden, und sie dann auf das Druckmedium aufdruckt.

30. Druckvorrichtung nach Anspruch 23, **dadurch gekennzeichnet,** dass das Druckmedium (32) aus einem Druckmaterial (32a), auf dem Drucken mit der Bilddruckeinrichtung (43) ausgeführt wird, einem Abziehmaterial (33c) und einer Klebeschicht (32b) besteht, die diese Materialien miteinander verbindet.

31. Druckvorrichtung, **dadurch gekennzeichnet,** dass sie umfasst:
eine Haupteinheit (11), die von dem Benutzer bewegt wird;
eine Bildleseeinrichtung (24), die im unteren Teil der Haupteinheit (11) vorhanden ist und Bilder liest, wenn die Haupteinheit (11) bewegt wird;
eine Speichereinrichtung (107), die in der Haupteinheit (11) vorhanden ist und die von der Bildleseeinrichtung (24) gelesenen Bilder speichert;
ein bandförmiges Druckmedium (32), das in der Haupteinheit (11) vorhanden ist; und
eine Druckeinrichtung (43), die in der Haupteinheit (11) vorhanden ist und die in der Speichereinrichtung (107) gespeicherten Bilder auf das Druckmedium (32) aufdruckt, während das Druckmedium (32) aus der Haupteinheit (11) hinaustransportiert wird.

32. Druckvorrichtung nach Anspruch 31, **dadurch gekennzeichnet,** dass sie des Weiteren umfasst:
eine erste Erfassungseinrichtung (101), die die maximale Breite des von der Bildleseeinrichtung (24) gelesenen Bildes erfasst; und
eine zweite Erfassungseinrichtung (105), die die Größe des Druckmediums (32) erfasst;
eine Bildveränderungseinrichtung (113), die die Größe des von der Bildleseeinrichtung (24) gelesenen Bildes auf der Grundlage der maximalen Breite, die von der ersten Erfassungseinrichtung (101) erfasst wird, und der Größe des Druckmediums (32), die von der zweiten Erfassungseinrichtung (105) erfasst wird, verändert, wobei:
die Bilddruckeinrichtung (43) das durch die Bildveränderungseinrichtungen (113) veränderte Bild auf dem Druckmedium (32) erzeugt.

33. Druckvorrichtung nach Anspruch 31, **dadurch gekennzeichnet,** dass das Druckmedium (32) in einer Kassette (31) aufgenommen ist, und die Kassette (31) lösbar in der Haupteinheit (11) installiert ist.

## Revendications

1. Appareil d'impression caractérisé en ce qu'il comprend :
une unité principale mobile (11) ;
un moyen de lecture d'image (24) prévu sur ladite unité principale (11);
un support d'impression en forme de bande (32) qui est prévu dans ladite unité principale (11) et qui inclut un matériau d'impression (32a) muni d'une surface d'impression, un matériau exfoliable (32c) destiné à être exfolié après impression et une couche adhésive (32b) qui lie le matériau d'impression (32a) avec le matériau exfoliable (32c) ; et
un moyen d'impression d'image (43) prévu sur ladite unité principale (11),
dans lequel :
ledit moyen de lecture d'image (24) inclut un lecteur d'image qui lit une image en fonction du déplacement de ladite unité principale (11); et
ledit moyen d'impression d'image (43) inclut un moyen de déplacement (29, 42) qui déplace ledit support d'impression en forme de bande (32) dans ladite unité principale (11) et une imprimante (43) qui imprime l'image qui est lue par ledit moyen de lecture d'image (24) sur ledit support d'impression en forme de bande (32) qui est déplacé par ledit moyen de déplacement (29, 42).

2. Appareil d'impression selon la revendication 1, caractérisé en ce qu'il comprend en outre :
un premier moyen de détection (101) pour détecter la largeur maximum, suivant la direction perpendiculaire à la direction suivant laquelle ladite unité principale (11) se déplace, de l'image lue par ledit moyen de lecture d'image (24) ; et
un second moyen de détection (105) pour détecter la largeur dudit support d'impression (32),
dans lequel :
ledit moyen d'impression d'image (43) inclut un moyen (43, 113) qui modifie l'image lue par ledit moyen de lecture d'image (24) et qui imprime l'image modifiée sur ledit support d'impression (32) sur la base de la largeur maximum qui est détectée par ledit premier moyen de détection (101) et de la largeur du support d'impression (32) qui est détectée par ledit second moyen de détection (105).

3. Appareil d'impression selon la revendication 1, caractérisé en ce que ladite unité principale (11) est constituée de manière à être plus étroite au niveau d'une extrémité et plus large au niveau de l'autre extrémité et ledit moyen de lecture d'image (24) est prévu au niveau de ladite une extrémité.

4. Appareil d'impression selon la revendication 1, caractérisé en ce que ledit moyen de lecture d'image (24) inclut un moyen de stockage d'image (107) qui stocke des images lues.

5. Appareil d'impression selon la revendication 1, caractérisé en ce que :
ledit moyen de lecture d'image (24) inclut un moyen de stockage d'image (107) qui stocke des images lues ; et
ladite imprimante (43) dudit moyen d'impression d'image (43) imprime l'image qui est stockée dans ledit moyen de stockage d'image (107) sur ledit support d'impression (32).

6. Appareil d'impression selon la revendication 1, caractérisé en ce que :
ledit moyen de lecture d'image (24) inclut un moyen de stockage d'image (107) qui stocke les images lues selon l'ordre selon lequel elles ont été lues ; et
ledit moyen d'impression d'image (43) inclut un moyen (101) qui lit les images qui sont stockées dans ledit moyen de stockage d'image (107) à partir dudit moyen de stockage d'image (107) selon l'ordre différent de l'ordre selon lequel elles ont été stockées et qui applique les images sur ladite imprimante (43).

7. Appareil d'impression caractérisé en ce qu'il comprend :
une unité principale mobile (11) ;
un moyen de lecture d'image (24) prévu sur ladite unité principale (11) ; et
un support d'impression (32) qui est prévu dans ladite unité principale (11),
dans lequel :
ledit moyen de lecture d'image (24) lit une image en fonction du déplacement de ladite unité principale (11) ; et
un moyen d'impression d'image (43) prévu dans ladite unité principale qui inclut une imprimante (43) qui imprime l'image qui est lue par ledit moyen de lecture d'image (24) sur ledit support d'impression (32).

8. Appareil d'impression selon la revendication 7, caractérisé en ce qu'il comprend en outre :
un premier moyen de détection (101) pour détecter la largeur maximum de l'image qui est lue par ledit moyen de lecture d'image (24) ;
un second moyen de détection (105) pour détecter la dimension dudit support d'impression (32) ; et
un moyen de modification d'image (113) pour modifier la dimension de l'image qui est lue par ledit moyen de lecture d'image (24) sur la base de la largeur maximum de l'image détectée par ledit premier moyen de détection (101) et de la dimension du support d'impression (32) qui est détectée par ledit second moyen de détection (105),
dans lequel :
ledit moyen d'impression d'image (43) forme l'image dont la dimension a été modifiée par ledit moyen de modification d'image (113) sur ledit support d'impression (32).

9. Appareil d'impression selon la revendication 7, caractérisé en ce qu'il comprend en outre :
un premier moyen de détection (101) pour détecter la largeur maximum, suivant la direction perpendiculaire à la direction selon laquelle ladite unité principale (11) se déplace, de l'image qui est lue par ledit moyen de lecture d'image (24) ; et
un second moyen de détection (105) pour détecter la largeur dudit support d'impression (32),
dans lequel :
ledit moyen d'impression d'image inclut un moyen (43, 113) qui modifie l'image lue par ledit moyen de lecture d'image (24) et qui imprime l'image modifiée sur ledit support d'impression (32) sur la base de la largeur maximum qui est détectée par ledit premier moyen de détection (101) et de la largeur du support d'impression (32) qui est détectée par ledit second moyen de détection (105).

10. Appareil d'impression selon la revendication 7, caractérisé en ce que ladite unité principale (11) est constituée de manière à être plus étroite au niveau d'une extrémité et plus large au niveau de l'autre extrémité et ledit moyen de lecture d'image (24) est prévu au niveau de ladite une extrémité.

11. Appareil d'impression selon la revendication 7, caractérisé en ce que ledit moyen de lecture d'image (24) inclut un moyen de stockage d'image (107) qui stocke des images lues.

12. Appareil d'impression selon la revendication 7, caractérisé en ce que :
ledit moyen de lecture d'image (24) inclut un moyen de stockage d'image (107) qui stocke des images lues ; et
ledit moyen d'impression d'image inclut un moyen (43) qui imprime l'image qui est stockée dans ledit moyen de stockage d'image (107) sur ledit support d'impression (32).

13. Appareil d'impression selon la revendication 7, caractérisé en ce que :
ledit moyen de lecture d'image (24) inclut un moyen de stockage d'image (107) qui stocke les images lues selon l'ordre selon lequel elles ont été lues ; et
ledit moyen d'impression d'image inclut un moyen (101) qui lit les images qui sont stockées dans ledit moyen de stockage d'image (107) à partir dudit moyen de stockage d'image (107) selon l'ordre différent de l'ordre selon lequel elles ont été stockées et qui les applique sur ladite imprimante (43) afin de les imprimer sur le support d'impression (32).

14. Appareil d'impression selon la revendication 7, caractérisé en ce que ledit support d'impression (32) est constitué par un matériau d'impression (32a) sur lequel une impression est réalisée par ledit moyen d'impression d'image (43), par un matériau exfoliable (32c) et par une couche adhésive (32b) qui lie ces matériaux ensemble.

15. Appareil d'impression caractérisé en ce qu'il comprend :
une cartouche (31) dans laquelle un support d'impression (32) est logé ;
une unité principale (11) dans laquelle ladite cartouche (31) est installée d'une manière amovible et qui est déplacée par l'utilisateur ;
un moyen de lecture d'image (24) qui est prévu sur ladite unité principale et qui lit des images lorsque ladite unité principale (11) est déplacée ; et
un moyen d'impression (43) qui est installé sur ladite unité principale (11) et qui imprime l'image qui est lue par ledit moyen de lecture d'image (24) sur ledit support d'impression (32) dans ladite cartouche (31).

16. Appareil d'impression selon la revendication 15, caractérisé en ce qu'il comprend en outre :
un premier moyen de détection (101) pour détecter la largeur maximum, suivant la direction perpendiculaire à la direction selon laquelle ladite unité principale (11) se déplace, de l'image qui est lue par ledit moyen de lecture d'image (24) ; et
un second moyen de détection (105) pour détecter la largeur dudit support d'impression (32),
dans lequel :
ledit moyen d'impression d'image inclut un moyen d'impression (43, 113) qui modifie l'image qui est lue par ledit moyen de lecture d'image (24) et qui imprime l'image modifiée sur ledit support d'impression (32) sur la base de la largeur maximum qui est détectée par ledit premier moyen de détection (101) et de la largeur dudit support d'impression (32) qui est détectée par ledit second moyen de détection (105).

17. Appareil d'impression selon la revendication 15, caractérisé en ce qu'il comprend en outre :
un premier moyen de détection (101) pour détecter la largeur maximum de l'image qui est lue par ledit moyen de lecture d'image (24) ; et
un second moyen de détection (105) pour détecter la largeur dudit support d'impression (32),
dans lequel :
ledit moyen d'impression d'image inclut un moyen (43, 113) qui modifie l'image qui est lue par ledit moyen de lecture d'image (24) et qui imprime l'image modifiée sur ledit support d'impression (32) sur la base de la largeur maximum qui est détectée par ledit premier moyen de détection (101) et de la largeur dudit support d'impression (32) qui est détectée par ledit second moyen de détection (105).

18. Appareil d'impression selon la revendication 15, caractérisé en ce que ladite unité principale (11) est constituée de manière à être plus étroite au niveau d'une extrémité et plus large au niveau de l'autre extrémité, et ledit moyen de lecture d'image (24) est prévu au niveau de ladite une extrémité.

19. Appareil d'impression selon la revendication 15, caractérisé en ce que ledit moyen de lecture d'image (24) inclut un moyen de stockage d'image (107) qui stocke des images lues.

20. Appareil d'impression selon la revendication 15, caractérisé en ce que :
ledit moyen de lecture d'image (24) inclut un moyen de stockage d'image (107) qui stocke des images lues ; et
ledit moyen d'impression d'image inclut une imprimante (43) qui imprime l'image qui est stockée dans ledit moyen de stockage d'image (107).

21. Appareil d'impression selon la revendication 15, caractérisé en ce que :
ledit moyen de lecture d'image (24) inclut un moyen de stockage d'image (107) qui stocke les images lues selon l'ordre selon lequel elles ont été lues ; et
ledit moyen d'impression d'image inclut un moyen (43, 101) qui lit les images qui sont stockées dans ledit moyen de stockage d'image (107) à partir dudit moyen de stockage d'image (107) selon l'ordre différent de l'ordre selon lequel elles ont été lues puis qui les imprime sur ledit support d'impression (32).

22. Appareil d'impression selon la revendication 15, caractérisé en ce que ledit support d'impression (32) est constitué par un matériau d'impression (32a) sur lequel une impression est réalisée par ledit moyen d'impression d'image (43), par un matériau exfoliable (32c) et par une couche adhésive (32b) qui lie ces matériaux ensemble.

23. Appareil d'impression caractérisé en ce qu'il comprend :
une unité principale (11) déplacée par l'utilisateur ;
un moyen de lecture d'image (24) prévu dans la partie inférieure de ladite unité principale (11);
un moyen d'impression d'image (43) prévu dans ladite unité principale (11) ;
un support d'impression (32) qui est prévu dans ladite unité principale (11) et sur lequel une impression est réalisée par ledit moyen d'impression d'image (43) ;
un moyen d'établissement de mode (103A) qui est prévu sur ladite unité principale (11) et qui établit soit un mode lecture d'image, soit un mode impression d'image ; et
un moyen d'entraînement (58, 59, 101) prévu sur ladite unité principale (11),
dans lequel :
ledit moyen d'entraînement (58, 59, 101) inclut un moyen qui, tandis que ledit moyen d'établissement de mode (103A) est dans le mode impression, lorsque ladite unité principale (11) est déplacée, pilote ledit moyen d'impression d'image (43) pour imprimer sur ledit support d'impression (32) en fonction du déplacement et qui, tandis que ledit moyen d'établissement de mode (103A) est dans le mode lecture, lorsque ladite unité principale (11) est déplacée, pilote ledit moyen de lecture d'image (24) afin de lire en fonction du déplacement.

24. Appareil d'impression selon la revendication 23, caractérisé en ce qu'il comprend en outre :
un premier moyen de détection (101) pour détecter la largeur maximum de l'image qui est lue par ledit moyen de lecture d'image (24) ; et
un second moyen de détection (105) pour détecter la dimension dudit support d'impression (32) ;
un moyen de modification d'image (113) pour modifier la dimension de l'image qui est lue par ledit moyen de lecture d'image (24) sur la base de la largeur maximum qui est détectée par ledit premier moyen de détection (101) et de la dimension du support d'impression (32) qui est détectée par ledit second moyen de détection (105),
dans lequel :
ledit moyen d'impression d'image (43) forme l'image modifiée par ledit moyen de modification d'image (113) sur ledit support d'impression (32).

25. Appareil d'impression selon la revendication 23, caractérisé en ce qu'il comprend en outre :
un premier moyen de détection (101) pour détecter la largeur maximum, suivant la direction perpendiculaire à la direction selon laquelle ladite unité principale (11) se déplace, de l'image qui est lue par ledit moyen de lecture d'image (24) ; et
un second moyen de détection (105) pour détecter la largeur dudit support d'impression (32),
dans lequel :
ledit moyen d'impression d'image inclut un moyen d'impression (43, 113) qui modifie l'image qui est lue par ledit moyen de lecture d'image (24) et qui imprime l'image modifiée sur ledit support d'impression (32) sur la base de la largeur maximum qui est détectée par ledit premier moyen de détection (101) et de la largeur du support d'impression (32) qui est détectée par ledit second moyen de détection (105).

26. Appareil d'impression selon la revendication 23, caractérisé en ce que ladite unité principale (11) est constituée de manière à être plus étroite au niveau d'une extrémité et plus large au niveau de l'autre extrémité, et ledit moyen de lecture d'image (24) est prévu au niveau de ladite une extrémité.

27. Appareil d'impression selon la revendication 23, caractérisé en ce que ledit moyen de lecture d'image (24) inclut un moyen de stockage d'image (107) qui stocke des images lues.

28. Appareil d'impression selon la revendication 23, caractérisé en ce que :
ledit moyen de lecture d'image (24) inclut un moyen de stockage d'image (107) qui stocke des images lues ; et
ledit moyen d'impression d'image (43) inclut une imprimante (43) qui imprime l'image qui est stockée dans ledit moyen de stockage d'image (107).

29. Appareil d'impression selon la revendication 23, caractérisé en ce que :
ledit moyen de lecture d'image (24) inclut un moyen de stockage d'image (107) qui stocke les images lues selon l'ordre selon lequel elles ont été lues ; et
ledit moyen d'impression d'image (43) inclut un moyen (43, 101) qui lit les images qui sont stockées dans ledit moyen de stockage d'image (107) à partir dudit moyen de stockage d'image (107) selon l'ordre différent de l'ordre selon lequel elles ont été stockées puis qui les imprime sur ledit support d'impression.

30. Appareil d'impression selon la revendication 23, caractérisé en ce que ledit support d'impression (32) est constitué par un matériau d'impression (32a) sur lequel une impression est réalisée par ledit moyen d'impression d'image (43), par un matériau exfoliable (32c) et par une couche adhésive (32b) qui lie ces matériaux ensemble.

31. Appareil d'impression caractérisé en ce qu'il comprend :
une unité principale (11) déplacée par l'utilisateur ;
un moyen de lecture d'image (24) qui est prévu dans la partie inférieure de ladite unité principale (11) et qui lit des images lorsque ladite unité principale (11) est déplacée ;
un moyen de stockage (107) qui est prévu dans ladite unité principale (11) et qui stocke les images qui sont lues par ledit moyen de lecture d'image (24) ;
un support d'impression en forme de bande (32) prévu dans ladite unité principale (11) ; et
un moyen d'impression (43) qui est prévu dans ladite unité principale (11) et qui imprime l'image qui est stockée dans ledit moyen de stockage d'image (107) sur ledit support d'impression (32) tandis que ledit support d'impression (32) est en train d'être convoyé en direction de l'extérieur de ladite unité principale (11).

32. Appareil d'impression selon la revendication 31, caractérisé en ce qu'il comprend en outre :
un premier moyen de détection (101) pour détecter la largeur maximum de l'image qui est lue par ledit moyen de lecture d'image (24) ; et
un second moyen de détection (105) pour détecter la dimension dudit support d'impression (32) ;
un moyen de modification d'image (113) pour modifier la dimension de l'image qui est lue par ledit moyen de lecture d'image (24) sur la base de la largeur maximum qui est détectée par ledit premier moyen de détection (101) et de la dimension du support d'impression (32) qui est détectée par ledit second moyen de détection (105),
dans lequel :
ledit moyen d'impression d'image (43) forme l'image modifiée par ledit moyen de modification d'image (113) sur ledit support d'impression (32).

33. Appareil d'impression selon la revendication 31, caractérisé en ce que ledit support d'impression (32) est logé dans une cartouche (31) et la cartouche (31) est installée dans ladite unité principale (11) d'une manière amovible.
